# EUROPEAN PATENT APPLICATION

(11) **EP 4 000 386 A1**
(43) Date of publication of application: **25.05.2022**
(21) Application number: 21000328.1
(22) Date of filing: 15.11.2021
(51) Int. Cl.: A01K 7/06, A01K 9/00

(54) **ANIMAL DRINKING DEVICE**

(30) Priority: 13.11.2020 ES 202000526 U
(71) Applicant: Sosa Aguiar, Óscar Luis, 31110 Noain-Valle de Elorz Navarra (ES)
(72) Inventor: Sosa Aguiar, Óscar Luis, 31110 Noain-Valle de Elorz Navarra (ES)

(57) **Abstract**

The present invention refers to a milk drinking device (1) for animals comprising: a base of substantially elongated shape comprising for milk inlet (2), means for water inlet (3) and outlet (7), an open feeding plate (4) of elongated shape, arranged on top of said base, characterized in that it comprises means (5) for rotating said feeding plate 180° from a feeding position to a washing position.

## Description

The present invention relates to a device suitable as a drinking trough for animals, in particular it can be used as milk trough for piglets. With the device of the present invention it is possible to perform automatically the stages of filling of the food liquid, for example milk, and subsequent washing thereof.

In pig breeding, thanks to advances in reproduction methods and genetics, sows give birth to a larger number of piglets than they can feed naturally. In the lactation process, there is a natural struggle between the piglets where the weaker piglets have less chance and this causes them to have less favorable growth curves or to die prematurely. Usually, the stronger piglets push the weaker ones aside.

To prevent part of the litter from being left out of a good diet, farmers resort to several methods including: placing part of the litter with other mothers (nurse sows), who have fewer piglets or who are dedicated to this on the farm, or placing milk troughs so that the piglets are fed alternately.

On the other hand, on farms, it is necessary that the sows spend the minimum time necessary to suckle their piglets in order to be inseminated again and thus increase productivity. In this case, it is also necessary to continue feeding the piglets with a dedicated nurse sow or to use artificial systems.

Artificial systems, also called "wet nursers", are usually equipment that mixes powdered milk with water and other nutrients and sends them through tubes to the drinking troughs located in the different pens. There are different types of feeding troughs on the market. However, they all have the problem of having to be cleaned daily. The usual feeding systems comprise ducts through which the milk is transported to the drinking trough where, by means of a dispensing valve, operated by the piglets with their noses, the milk is deposited in the trough where it is drunk by the piglets. The milk that is retained in the pipes or in the trough itself ferments from one day to the next, and if it is drunk by the piglets it can cause them different diseases. For this reason, the whole system must be cleaned at least once a day, and it is usual to manually clean all the troughs one by one with pressurized water, and also to pass water through the hoses after each day.

The inventor of the present invention has developed a drinking device for animals, especially suitable as a milk trough for young pigs, with which it is possible to feed and subsequently automatically clean the device, without the need for an operator to perform the cleaning function of the drinking trough. Furthermore, the device of the present invention can be placed in parallel, which makes it possible to use it on farms for feeding several animals in the early stages of life at the same time.

### BRIEF DESCRIPTION OF THE FIGURES

Certain features and functions of the present invention are described in more detail below by reference to the attached schematic figures in which:
Figure 1 shows a perspective view of an embodiment of the animal drinking device according to the present invention.
Figure 2 shows an exploded view of the embodiment of figure 1 with the plate in the animal feeding position.
Figure 3 shows an exploded view of the embodiment of figure 1 with the plate in the washing position.
Figure 4 shows an exploded view of the embodiment of figure 1 showing all the components of the device.
Figure 5 shows several devices of the present invention placed in parallel in a pig farm.

### DETAILED DESCRIPTION OF THE INVENTION

The present invention discloses a milk drinking device for animals comprising: a substantially cylindrical base comprising means for milk inlet; means for water inlet and outlet, an open hemispherical shaped feeding plate arranged at its top, and means for rotating the feeding plate 180° from a feeding position to a washing position.

Preferably, the means for milk inlet comprise a pipe in fluid communication with the feeding plate and a dispensing valve. This pipe comprises a mechanism allowing it to rotate 180 degrees around its longitudinal axis.

Preferably, the means for water inlet comprise an inlet pipe having a spring, a piston, a movable part with a groove, inside which passes the milk inlet pipe with the rotating mechanism, and a shower.

The device of the present invention can be made of any material known by a person skilled in the art, for example of metal such as stainless steel, of plastic, or a combination thereof.

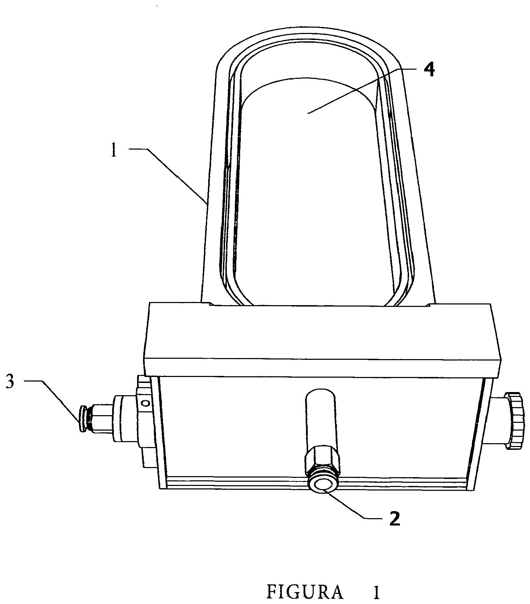

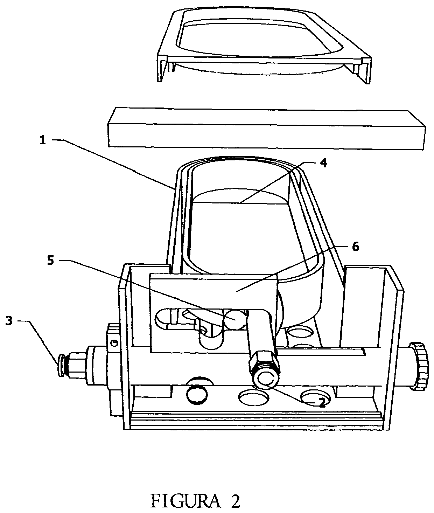

As shown in figure 1, the drinking device -1- for animals of the present invention comprises means for milk inlet -2-, means for water inlet -3-, and a feeding plate -4- of elongated and concave shape. Figure 2 shows that such means for the milk inlet -2- are in fluid communication with the feeding plate -4- and comprises a mechanism for its rotation -5- The mechanism -5- is coupled with a movable transverse slotted piece -6- arranged in the water inlet means -3-.

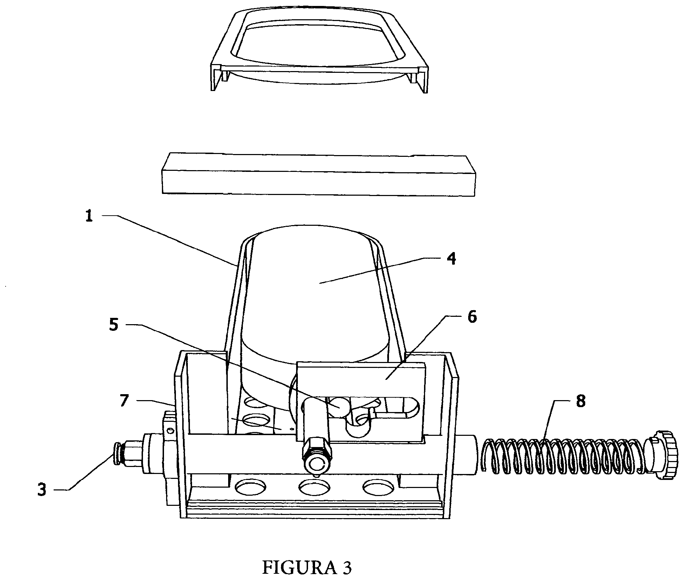

As shown in figure 3, the movement of the means for the water inlet -3- due to the water inlet pressure, makes the piston move the transversal piece -6- that interacts with the turning mechanism -5- and turns the feeding plate -4- 180°, leaving the upper part where the milk is placed parallel to the floor. At that moment, the piston uncovers a hole that lets the water pass to the shower -7-, which washes the surface of the feeding plate, which has been previously soiled with the piglets' feeding milk. Subsequently, when the water pressure is removed, a spring -8- makes the feeding plate -4- return to its initial position for a new feeding of the piglets.

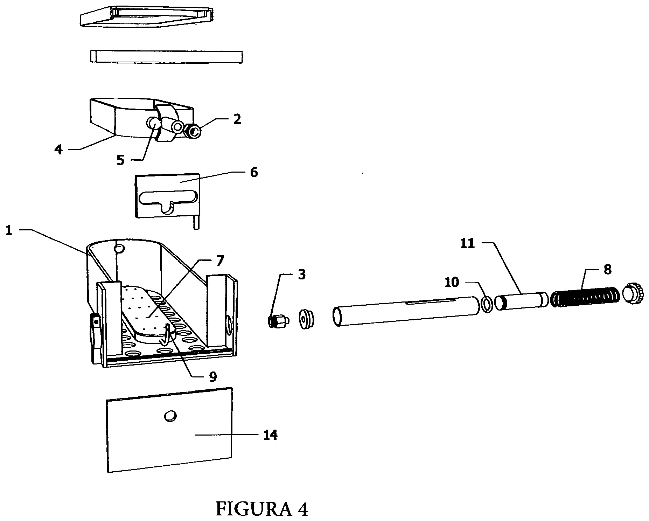

Figure 4 shows all the components of the drinking device of the present invention. The drinking device -1- comprising milk inlet means -2- in the form of a cylindrical pipe, comprising a turning mechanism -5- in its external part and both having the same longitudinal axis. Furthermore, it comprises water inlet means -3-, in the form of a cylindrical pipe, a spring -8-, a transversal slotted piece -6- on one of the sides of the cylindrical pipe, a shower -7- to which the water is supplied by means of a conduit -9-. Inside these water inlet means - 3- there are O-rings -10- and a piston -11-, which act as a valve that lets the water flow into the shower when the feed plate -4- is in the washing position, i.e. rotated 180° from the normal feed position.

In operation, when the piglets touch the dispensing valve located on the feeding plate -4-with their noses, milk is released, as is usual in all animal drinking troughs. When the piglets have already eaten, water with the usual tap pressure, i.e. between 100 kPa and 500 kPa, is delivered to the piglets. The water pressure pushes the water inlet means -3- and the transverse slotted part -6- of these means drives the turning mechanism -5- of the milk inlet means -2-, causing the feeding plate -4- to rotate 180° towards a washing position. Once rotated, the plate uncovers an orifice that allows water to flow into the shower, which cleans the feed plate -4-. When the shower inlet valve is closed, a spring returns the water inlet means to its previous position, which causes the feed plate -4- to return to its initial feeding position.

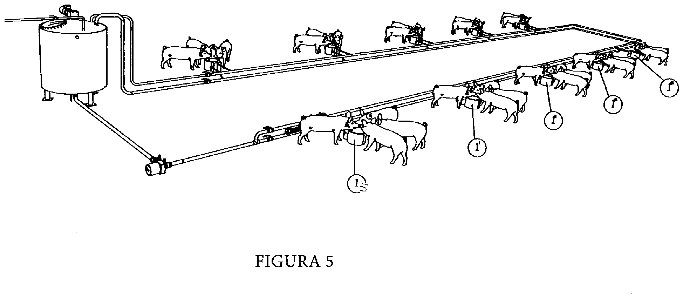

Finally, Figure 5 shows how several of the devices of the present invention are placed in parallel in a maternity farm.

While the invention has been described with respect to examples of preferred embodiments, these are not to be considered limiting of the invention, which will be defined by the broader interpretation of the following claims.

## Claims

1. Milk drinking device for animals comprising: a base with substantially elongated shape comprising means for milk inlet, means for water inlet and outlet, an open feeding plate of elongated and concave shape, arranged on the upper part of the base, **characterized in that** it comprises means for rotating the feeding plate 180° from a feeding position to a washing position.

2. Device according to claim 1, **characterized in that** said means for milk inlet comprise a pipe in fluid communication with the feeding plate and dispensing valve.

3. Device according to claim 2, **characterized in that** the pipe comprises a turning mechanism, the pipe and the turning mechanism having the same longitudinal axis.

4. Device, according to any of the preceding claims, **characterized in that** said water inlet means comprise an inlet pipe having a spring, a slotted movable part, a milk dispensing valve and a shower.

5. Device according to any of the preceding claims, **characterized in that** it is made of metal or plastic, or a combination thereof.
